# EUROPÄISCHE PATENTSCHRIFT

(11) **EP 3 575 593 B1**
(45) Veröffentlichungstag und Bekanntmachung des Hinweises auf die Patenterteilung: **28.07.2021**
(21) Anmeldenummer: 19180790.8
(22) Anmeldetag: 04.12.2013
(51) Int. Cl.: F02M 61/14, F02M 69/46

(54) **BRENNSTOFFEINSPRITZANLAGE MIT EINER BRENNSTOFF FÜHRENDEN KOMPONENTE, EINEM BRENNSTOFFEINSPRITZVENTIL UND EINEM VERBINDUNGSELEMENT**
FUEL INJECTION SYSTEM WITH A FUEL CONVEYING COMPONENT, A FUEL INJECTOR VALVE AND A CONNECTING ELEMENT
INSTALLATION D'INJECTION DE COMBUSTIBLE DOTÉE D'UN COMPOSANT D'ACHEMINEMENT DE COMBUSTIBLE, D'UNE SOUPAPE D'INJECTION DE COMBUSTIBLE ET D'UN ÉLÉMENT DE RACCORDEMENT

(30) Priorität: 22.01.2013 DE 102013200909
(43) Veröffentlichungstag der Anmeldung: 04.12.2019
(62) Teilanmeldung aus: 13799076.8
(73) Patentinhaber: Robert Bosch GmbH, 70442 Stuttgart (DE)
(72) Erfinder: Fischer, Michael, 75223 Niefern-Oeschelbronn (DE); Knorpp, Michael, 71287 Weissach (DE); Riemer, Martin, 74199 Untergruppenbach (DE); Horst, Hans-Georg, 71229 Leonberg (DE); Glaser, Andreas, 70372 Stuttgart (DE); Rogler, Philipp, 70176 Stuttgart (DE); Herrmann, Jan, 71332 Waiblingen (DE); Rehwald, Andreas, 74321 Bietigheim-Bissingen (DE); Mayer, Michael, 72827 Wannweil (DE); Scheef, Volker, 71640 Ludwigsburg (DE); Reinhardt, Wilhelm, 71638 Ludwigsburg (DE)

(56) Entgegenhaltungen:
- WO-A1-2013/160064
- DE-A1-102005 020 380
- US-B1- 7 334 571

## Beschreibung

### Stand der Technik

Die Erfindung betrifft ein Verbindungselement für Brennstoffeinspritzanlagen zur Verbindung eines Brennstoffeinspritzventils mit einer Brennstoff führenden Komponente und eine Brennstoffeinspritzanlage mit solch einem Verbindungselement. Speziell betrifft die Erfindung das Gebiet der Brennstoffeinspritzanlagen für gemischverdichtende, fremdgezündete Brennkraftmaschinen.

Aus der US 7,334,571 B1 ist bereits ein Verbindungselement für Brennstoffeinspritzanlagen zur Verbindung eines Brennstoffeinspritzventils mit einer Brennstoff führenden Komponente bekannt, wobei ein Grundkörper vorgesehen ist, in dem ein Aufnahmeraum für einen Brennstoffstutzen des Brennstoffeinspritzventils vorgesehen ist. Der zumindest teilweise in dem Aufnahmeraum anordenbare Brennstoffstutzen ist unmittelbar an dem Grundkörper abgestützt. Der Brennstoffstutzen ist dabei an dem Grundkörper mittels eines Injektorauflagerings neben einer axialen Abstützung in gewisser Weise auch in einer radialen Richtung elastisch abgestützt. Bei dem Grundkörper handelt es sich um einen festen, starren Aufnahmestutzen der Brennstoff führenden Komponente.

Aus der DE 10 2005 020 380 A1 ist eine Brennstoffeinspritzvorrichtung bekannt, die sich durch eine Schall entkoppelnden Bauweise auszeichnet. Die bekannte Brennstoffeinspritzvorrichtung umfasst ein Brennstoffeinspritzventil, eine Aufnahmebohrung für das Brennstoffeinspritzventil in einem Zylinderkopf einer Brennkraftmaschine und eine Brennstoffverteilerleitung mit einem Anschlussstutzen. In den Anschlussstutzen ist das Brennstoffeinspritzventil teilweise überlappend eingebracht. Bei einer möglichen Ausgestaltung ist ein geschlitzter Schnappring vorgesehen, der in einen verjüngten Abschnitt eines Zulaufstutzens des Brennstoffeinspritzventils eingreift. Im Anschlussstutzen ist hierfür eine Nut vorgesehen, in der der Schnappring sicher und fest eingerastet ist. Zum Untergreifen des Brennstoffeinspritzventils besitzt der Schnappring eine konische oder gewölbte sphärische Anlagefläche.

Die aus der DE 10 2005 020 380 A1 bekannte Ausgestaltung der Brennstoffeinspritzvorrichtung hat den Nachteil, dass über den Schnappring Schwingungen von dem Brennstoffeinspritzventil auf den Anschlussstutzen übertragen werden können. Hierdurch kann es zu einer ungewünschten Geräuschentwicklung kommen.

Speziell bei elektromagnetischen Hochdruck-Einspritzventilen, die bei OttoMotoren mit Direkteinspritzung zum Einsatz kommen, kann ein auffälliger und störender Beitrag zum Gesamtgeräusch des Motors geleistet werden, der als Ventiltickern beschreibbar ist. Solch ein Ventiltickern entsteht durch das schnelle Öffnen und Schließen des Brennstoffeinspritzventils, bei dem die Ventilnadel mit hoher Dynamik in die jeweiligen Endanschläge verstellt wird. Das Auftreffen der Ventilnadel an den Endanschlägen führt zu kurzzeitigen, sehr hohen Kontaktkräften, die über ein Gehäuse des Brennstoffeinspritzventils an den Zylinderkopf und an eine Brennstoffverteilerleiste in Form von Körperschall und Schwingungen übertragen werden. Dies führt am Zylinderkopf und an der Brennstoffverteilerleiste zu einer starken Geräuschentwicklung.

### Offenbarung der Erfindung

Das erfindungsgemäße Verbindungselement mit den Merkmalen des Anspruchs 1 und die erfindungsgemäße Brennstoffeinspritzanlage mit den Merkmalen des Anspruchs 3 haben den Vorteil, dass eine verbesserte Verbindung des Brennstoffeinspritzventils mit der Brennstoff führenden Komponente ermöglicht ist, wobei eine Geräuschreduzierung ermöglicht ist. Speziell kann eine weiche Aufhängung des Brennstoffeinspritzventils an der Brennstoff führenden Komponente erzielt werden, bei der eine wesentliche Verringerung der Geräuschentwicklung erzielbar ist, worin die Aufgabe der Erfindung liegt.

Durch die in den Unteransprüchen aufgeführten Maßnahmen sind vorteilhafte Weiterbildungen des im Anspruch 1 angegebenen Verbindungselements und der im Anspruch 3 angegebenen Brennstoffeinspritzanlage möglich.

Speziell eignen sich das Verbindungselement und die Brennstoffeinspritzanlage zur direkten Einspritzung von Brennstoff, insbesondere von Benzin. Die Brennstoff führende Komponente ist hierbei vorzugsweise als Brennstoffverteiler, insbesondere als Brennstoffverteilerleiste, ausgebildet. Solch ein Brennstoffverteiler dient im Betrieb zum Speichern von unter hohem Druck stehenden Brennstoff und zum Verteilen des Brennstoffs auf mehrere Brennstoffeinspritzventile. Hierbei können mehrere Verbindungselemente vorgesehen sein, die auf geeignete Weise mit dem Brennstoffverteiler verbunden sind oder auch Teile des Brennstoffverteilers darstellen. Im Betrieb spritzen die Brennstoffeinspritzventile den zum Verbrennungsvorgang notwendigen Brennstoff dann unter hohem Druck in den jeweiligen Verbrennungsraum ein. Der Brennstoff kann von einer Hochdruckpumpe mengengesteuert dem Brennstoffverteiler zugeführt werden.

Die Brennstoff führende Komponente und das Brennstoffeinspritzventil, insbesondere der Brennstoffstutzen, sind nicht notwendigerweise Teile des erfindungsgemäßen Verbindungselements. Insbesondere kann das erfindungsgemäße Verbindungselement auch getrennt von der Brennstoff führenden Komponente sowie dem Brennstoffeinspritzventil hergestellt und vertrieben werden.

Das Verbindungselement ermöglicht bei einem kleinen Bauraum eine gezielte Entkopplung, wobei eine gewünschte Steifigkeit der Entkopplung vorgegeben werden kann und zugleich die geforderte Festigkeit, insbesondere in Bezug auf hohe Systemdrücke, über die Lebensdauer gewährleistet ist. Hierbei ist eine weiche Ankopplung des Brennstoffeinspritzventils zu der Brennstoff führenden Komponente möglich, wobei eine gewünschte Zielsteifigkeit vorzugsweise nicht größer als 50 kN/mm sein kann. Hierzu kann der Grundkörper elastisch verformbar ausgeführt werden. Zusätzlich oder alternativ kann die Elastizität über ein elastisch verformbares Entkoppelelement realisiert werden, das vorzugsweise im Bereich des Aufnahmeraums in den Grundkörper eingebracht ist.

Vorteilhaft ist es daher, dass zumindest ein Entkoppelelement vorgesehen ist, das im montierten Zustand zwischen dem Brennstoffstutzen und dem Grundkörper angeordnet ist, und dass der Brennstoffstutzen über das Entkoppelelement zumindest in der radialen Richtung an dem Grundkörper elastisch abstützbar ist. Speziell kann hierbei über einen Werkstoff des Entkoppelelements die gewünschte Zielsteifigkeit vorgegeben werden. Dies ermöglicht auch eine Anpassung an den jeweiligen Anwendungsfall. Außerdem kann eine einfache Montage realisiert werden.

Hierbei ist es ferner vorteilhaft, dass der Grundkörper eine Öffnung aufweist, über die der Brennstoffstutzen in den Aufnahmeraum einführbar ist, und dass das Entkoppelelement zumindest teilweise an der Öffnung des Grundkörpers angeordnet ist. Hierdurch ergibt sich eine vorteilhafte Ausgestaltung bezüglich der erforderlichen Kraftübertragung beziehungsweise der sich ergebenden Hebelarme. Außerdem ist hierbei gegebenenfalls eine Kombination mit einem elastisch verformbaren Grundkörper realisierbar.

Vorteilhaft ist es auch, dass der Grundkörper eine Innenseite aufweist, dass das Entkoppelelement eine Außenfläche aufweist und dass das Entkoppelelement mit seiner Außenfläche an einer Anlagefläche der Innenseite des Grundkörpers flächig anliegt. Hierdurch kann zum einen eine vorteilhafte Kraftübertragung, insbesondere eine homogene Verteilung der Kraft auf einen elastischen Werkstoff des Entkoppelelements, erzielt werden. Hierdurch kann die geforderte Festigkeit auch bei hohen Systemdrücken über die Lebensdauer gewährleistet werden.

Ferner ist es vorteilhaft, dass zumindest die Anlagefläche der Innenseite des Grundkörpers zylindermantelförmig ausgestaltet ist. Hierdurch ergeben sich Vorteile, wenn die Beanspruchung hauptsächlich senkrecht zu der Anlagefläche, insbesondere in radialer Richtung, erfolgt.

Vorteilhaft ist es auch, dass das Entkoppelelement zumindest im Wesentlichen aus einem elastischen Werkstoff gebildet ist, der im montierten Zustand einerseits mit dem Grundkörper und andererseits mit dem Brennstoffstutzen verbunden ist. Beispielsweise ist eine kraftschlüssige Verbindung einerseits mit dem Grundkörper und andererseits mit dem Brennstoffstutzen realisierbar. Speziell kann die Verbindung durch Kleben oder Aufvulkanisieren von Elastomermaterial realisiert werden. Das Entkoppelelement kann bei dieser Ausgestaltung zum einen eine vorteilhafte Aufhängung des Brennstoffeinspritzventils realisieren. Zum anderen kann das Entkoppelelement zusätzlich als Dichtung dienen, die eine gegebenenfalls erforderliche Dichtfunktion ganz oder teilweise übernimmt.

Außerdem ist es vorteilhaft, dass der Brennstoffstutzen einen radialen Kranz aufweist und dass eine elastische Verformung des Entkoppelelements in radialer Richtung durch einen mechanischen Anschlag des Kranzes des Brennstoffstutzens an dem Grundkörper begrenzt ist. Der Kranz kann beispielsweise an einem zuflussseitigen Ende des Brennstoffstutzens ausgestaltet sein und zum Bilden des Anschlags mit der Innenwand des Grundkörpers zusammen wirken. Allerdings kann der Kranz des Brennstoffstutzens auch entfernt von dem zuflussseitigen Ende angeordnet sein.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigen:
Fig. 1 ein Verbindungselement und ein Brennstoffeinspritzventil in einer auszugsweisen, schematischen Schnittdarstellung entsprechend einem Beispiel;
Fig. 2 ein Verbindungselement und ein Brennstoffeinspritzventil in einer auszugsweisen, schematischen Schnittdarstellung entsprechend einem Beispiel;
Fig. 3 ein Verbindungselement und ein Brennstoffeinspritzventil in einer auszugsweisen, schematischen Schnittdarstellung entsprechend einem Beispiel;
Fig. 4 ein Verbindungselement und ein Brennstoffeinspritzventil in einer auszugsweisen, schematischen Schnittdarstellung entsprechend einem Ausführungsbeispiel der Erfindung;
Fig. 5 eine Brennstoffeinspritzanlage mit einem Verbindungselement in einer auszugsweisen, schematischen Schnittdarstellung entsprechend einem Beispiel und
Fig. 6 ein Brennstoffeinspritzventil mit einem Verbindungselement in einer auszugsweisen, schematischen Schnittdarstellung entsprechend einem Beispiel.

### Ausführungsformen der Erfindung

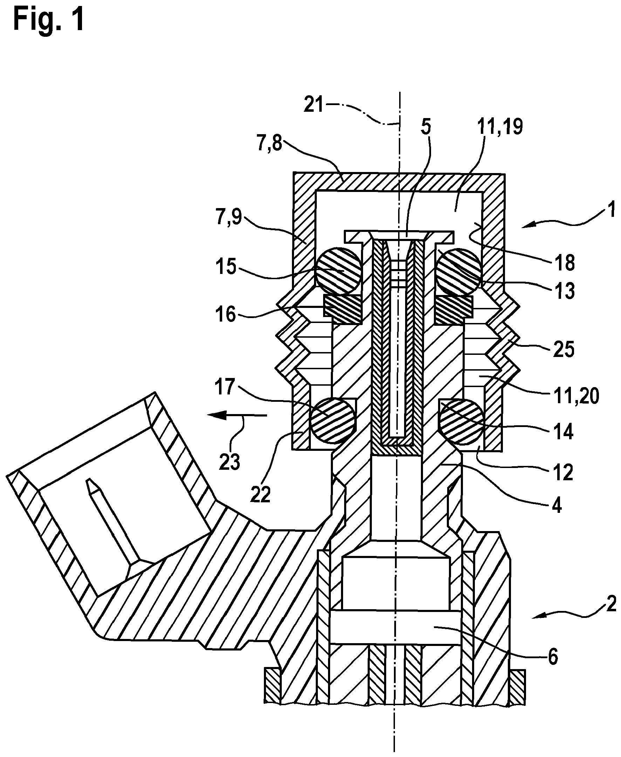

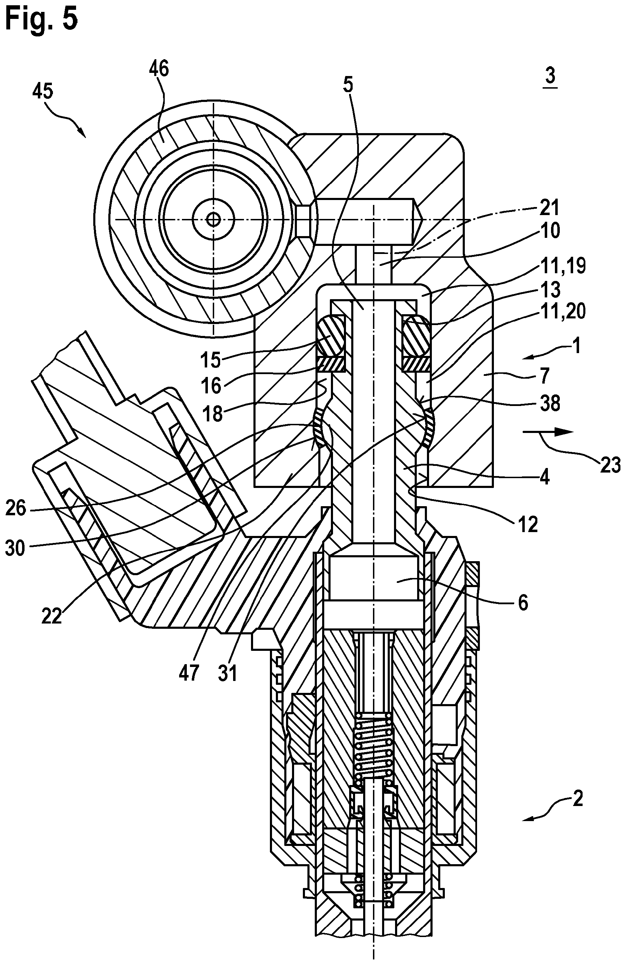

Fig. 1 zeigt ein Verbindungselement 1 und ein Brennstoffeinspritzventil 2 einer Brennstoffeinspritzanlage 3 (Fig. 5) in einer auszugsweisen, schematischen Schnittdarstellung entsprechend einem nicht erfindungsgemäßen Ausführungsbeispiel. Die Brennstoffeinspritzanlage 3 kann insbesondere zur Hochdruckeinspritzung bei Brennkraftmaschinen dienen. Speziell kann die Brennstoffeinspritzanlage 3 bei gemischverdichtenden, fremdgezündeten Brennkraftmaschinen zum Einsatz kommen. Das Verbindungselement 1 eignet sich besonders für solche Brennstoffeinspritzanlagen 3.

Das Brennstoffeinspritzventil 2 der Brennstoffeinspritzanlage 3 weist einen Brennstoffstutzen 4 auf. An einem zuflussseitigen Ende 5 des Brennstoffstutzens 4 wird im Betrieb Brennstoff in einen Brennstoffraum 6 des Brennstoffeinspritzventils 2 geführt.

Das Verbindungselement 1 weist einen Grundkörper 7 mit einem Oberteil 8 und einem rohrförmigen Teil 9 auf. In dem Oberteil 8 ist eine geeignete Zulaufbohrung 10 (Fig. 5) ausgestaltet, um Brennstoff in einen Aufnahmeraum 11 des Grundkörpers 7 des Verbindungselements 1 zu führen.

Der Brennstoffstutzen 4 ist im montierten Zustand in den Aufnahmeraum 11 eingeführt. Hierbei weist der Grundkörper 7 eine Öffnung 12 auf, über die der Brennstoffstutzen 4 bei der Montage in den Aufnahmeraum 11 eingeführt wird.

Der Brennstoffstutzen 4 des Brennstoffeinspritzventils 2 weist in diesem Ausführungsbeispiel durch Aussparungen 13, 14 gebildete Aufnahmen 13, 14 auf. Die Aufnahme 13 dient zum Aufnehmen eines Dichtelements 15 und einer Stützscheibe 16. Die Aufnahme 14 dient zum Aufnehmen eines Dichtelements 17, das im Bereich der Öffnung 12 angeordnet ist.

Durch das Dichtelement 15, das einerseits mit dem Brennstoffstutzen 4 und andererseits mit einer Innenseite 18 des Grundkörpers 7 zusammen wirkt, ist ein Teil 19 des Aufnahmeraums 11 gegenüber einem Teil 20 des Aufnahmeraums 11 abgedichtet. Ferner ist durch das Dichtelement 17, das einerseits mit dem Brennstoffstutzen 4 und andererseits mit der Innenseite 18 des Grundkörpers 7 zusammen wirkt, das Teil 20 des Aufnahmeraums 11 gegenüber der Umgebung abgedichtet.

Der Aufnahmeraum 11 des Grundkörpers 7 des Verbindungselements 1 weist eine Achse 21 auf, entlang der der Brennstoffstutzen 4 bei der Montage in den Aufnahmeraum 11 geführt wird. Somit stimmt im montierten Zustand die Achse 21 mit der Achse des Brennstoffstutzens 4 überein.

Im Betrieb können sich Erschütterungen oder Schwingungen unter anderem in einem Verkippen beziehungsweise einer radialen Bewegung des Brennstoffstutzens 4 auswirken. Hierdurch kann beispielsweise ein Ende 22 des Grundkörpers 7, an dem die Öffnung 12 vorgesehen ist, in und entgegen einer radialen Richtung 23 schwingen. Die radiale Richtung 23 ist hierbei senkrecht zu der Achse 21 und exemplarisch zur Veranschaulichung dargestellt. Die radiale Richtung 23 ist hierbei als senkrecht zu der Achse 21 zu verstehen.

In diesem Ausführungsbeispiel ist das rohrförmige Teil 9 des Grundkörpers 7 als Außenwand 9 ausgestaltet. Hierbei weist die Außenwand 9 einen elastisch verformbaren Abschnitt 25 auf. Der elastisch verformbare Abschnitt 25 der Außenwand 9 ist hierbei wellbalgförmig ausgestaltet. Eine Dicke der Außenwand 9 ist hierbei geeignet vorgegeben. Hierdurch ist eine elastische Verformung des Grundkörpers 7 ermöglicht. Dadurch ist der Brennstoffstutzen 4 an dem Grundkörper in der radialen Richtung 23 elastisch abgestützt.

Somit ist in diesem Ausführungsbeispiel gewährleistet, dass der Brennstoffstutzen 4 an dem Grundkörper 7 zumindest in der radialen Richtung 23 elastisch abgestützt ist. Hierbei sind auch geeignete Abwandlungen umfasst, bei denen der Brennstoffstutzen nicht nur in der radialen Richtung 23, sondern auch teilweise entlang der Achse 21 elastisch abgestützt ist.

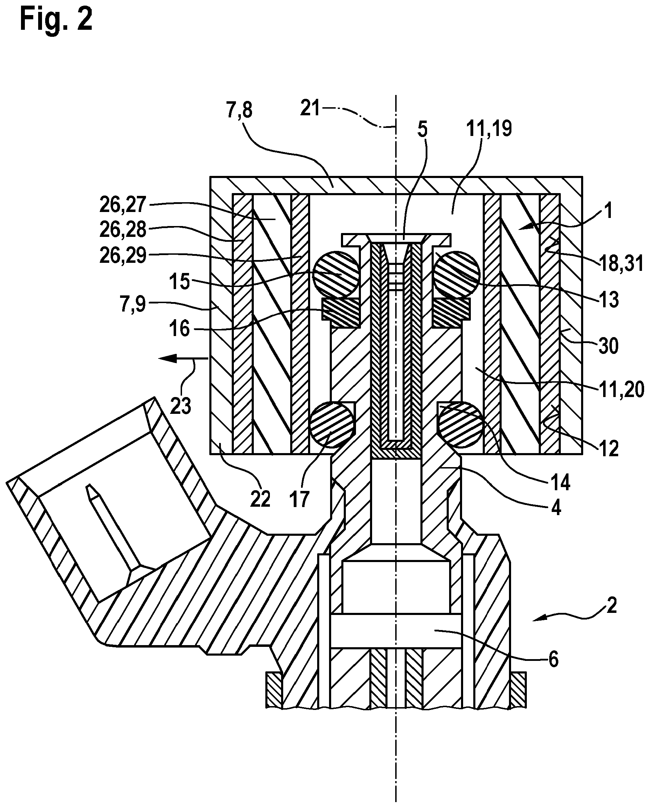

Fig. 2 zeigt das Verbindungselement 1 und das Brennstoffeinspritzventil 2 in einer auszugsweisen, schematischen Schnittdarstellung entsprechend einem nicht erfindungsgemäßen Ausführungsbeispiel. In diesem Ausführungsbeispiel ist ein Entkoppelelement 26 vorgesehen, das zwischen dem Brennstoffstutzen 4 und dem Grundkörper 7 angeordnet ist. In diesem Ausführungsbeispiel weist das Entkoppelelement 26 eine elastische Schicht 27 und metallische Schutzschichten 28, 29 auf. Die elastische Schicht 27 und die metallische Schutzschichten 28, 29 sind jeweils rohrförmig ausgestaltet und in radialer Richtung 23 geschichtet. Hierbei liegen die metallischen Schutzschichten 28, 29 in radialer Richtung 23 betrachtet außerhalb beziehungsweise innerhalb der elastischen Schicht 27.

Die metallische Schutzschicht 28 des Entkoppelelements 26 liegt an der Innenseite 18 des Grundkörpers 7 an. Die Dichtelemente 15, 17 liegen an der metallischen Schutzschicht 29 des Entkoppelelements 26 an. Somit ergibt sich zum einen eine flächige Anlage des Entkoppelelements 26 über seine metallische Schutzschicht 28 an der Innenseite 18 des Grundkörpers 7. Zum anderen werden punktuell über die Dichtelemente 15, 17 auf das Entkoppelelement 26 übertragene Kräfte mittels der metallischen Schutzschicht 29 vergleichmäßigt in die elastische Schicht 27 eingeleitet. Dadurch reduziert sich die mechanische Belastung, die auf die elastische Schicht 27 wirkt.

Das Entkoppelelement 26 weist eine Außenfläche 30 auf, die in diesem Ausführungsbeispiel an der metallischen Schutzschicht 28 ausgestaltet ist. Somit liegt das Entkoppelelement 26 über seine Außenfläche 30 flächig an der Innenseite 18 des Grundkörpers 7 an. Eine Anlagefläche 31 des Grundkörpers 7, an der das Entkoppelelement 26 mit seiner Außenfläche 30 flächig anliegt, ist in diesem Ausführungsbeispiel durch die gesamte Innenseite 18 des Grundkörpers 7 gebildet.

Die Außenfläche 30 des Entkoppelelements 26 und die Anlagefläche 31 des Grundkörpers 7 sind in diesem Ausführungsbeispiel jeweils zylindermantelförmig ausgestaltet.

Das Entkoppelelement 26 kann in den Grundkörper 7 eingepresst sein. Ferner kann das Entkoppelelement 26 durch Kleben mit dem Grundkörper 7 verbunden sein. Es sind auch andere Möglichkeiten zur Verbindung des Entkoppelelements 26 mit dem Grundkörper 7 denkbar. Die elastische Schicht 27 kann beispielsweise aus einem Elastomer gebildet sein. Die metallischen Schutzschichten 28, 29 können beispielsweise aus einem Stahl gebildet sein. Allerdings können die Schutzschichten 28, 29 bei einer entsprechend abgewandelten Ausgestaltung auch aus nichtmetallischen Werkstoffen gebildet sein.

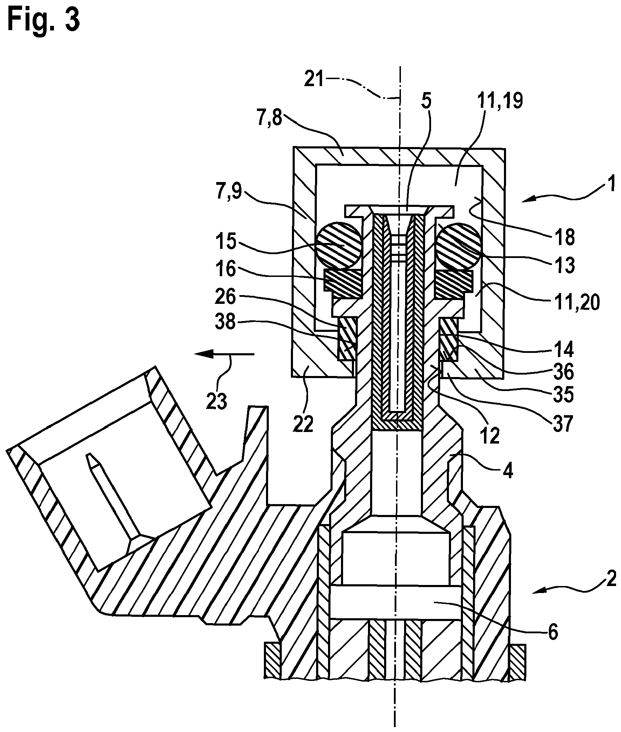

Fig. 3 zeigt ein Verbindungselement 1 und ein Brennstoffeinspritzventil 2 in einer auszugsweisen, schematischen Schnittdarstellung entsprechend einem nicht erfindungsgemäßen Ausführungsbeispiel. In diesem Ausführungsbeispiel weist der Grundkörper 7 einen Absatz 35 auf. Die Öffnung 12 ist innerhalb des Absatzes 35 ausgestaltet. Ferner ist an dem Absatz 35 im Bereich der Öffnung 12 eine Stufe 36 vorgesehen. Die Stufe 36 ist hierbei an einem Vorsprung 37 des Absatzes 35 ausgestaltet.

An der Stufe 36 des Absatzes 35 ist in diesem Ausführungsbeispiel das Entkoppelelement 26 angeordnet. Das Entkoppelelement 26 umschließt hierbei eine Außenseite 38 des Brennstoffstutzens 4 ringförmig.

Somit ist über das Entkoppelelement 26 eine elastische Abstützung des Brennstoffstutzens 4 an dem Grundkörper 7 in der radialen Richtung 23 gewährleistet.

Die Entkopplung wirkt hierbei nur bis zu einer bestimmten Verstellkraft beziehungsweise einem bestimmten, auf das Entkoppelelement 26 wirkenden Druckniveau. Die Begrenzung ist in diesem Ausführungsbeispiel dadurch realisiert, dass der Vorsprung 37 bei einer maximalen Verstellbewegung beziehungsweise Schwingungsamplitude an der Außenseite 38 des Brennstoffstutzens 4 anschlägt. Hierdurch wird eine maximale Belastung, die auf das Entkoppelelement 26 einwirken kann, entsprechend begrenzt.

Diese Ausgestaltung ist insbesondere bei Anwendungsfällen von Vorteil, in denen eine Entkoppelung hauptsächlich bei einem Leerlaufbetrieb gewünscht ist. Da die Entkoppelung dann vor allem bei Leerlaufdrehzahlen wirksam sein muss, ist dieses Konstruktionsmerkmal besonders dann sinnvoll, wenn ein Betriebsdruck im Leerlauf niedriger ist als bei höheren Drehzahlen.

Die Verbindung des Brennstoffstutzens 4 mit dem Verbindungselement 1 kann in diesem Ausführungsbeispiel beispielsweise durch einen Bajonettverschluss realisiert sein. Hierfür sind das Verbindungselement 1 und/oder der Brennstoffstutzen 4 nicht rotationssymmetrisch bezüglich der Achse 21, sondern in Umfangsrichtung unterbrochen ausgestaltet. Die Montage kann dann über eine Steck-Dreh-Bewegung erfolgen.

Bei einer abgewandelten Ausführungsform kann eine Montage allerdings auch durch eine mehrteilige Ausgestaltung des Grundkörpers 7 ermöglicht werden. Dann ist eine rotationssymmetrische Ausgestaltung des Verbindungselements 1 und des Brennstoffstutzens 4 möglich.

Somit kann in diesem Ausführungsbeispiel eine elastische Verformung des Entkoppelelements 26 in radialer Richtung 23 durch einen mechanischen Anschlag des Vorsprungs 37 des Grundkörpers 7 an der Außenseite 38 des Brennstoffstutzens 4 begrenzt sein.

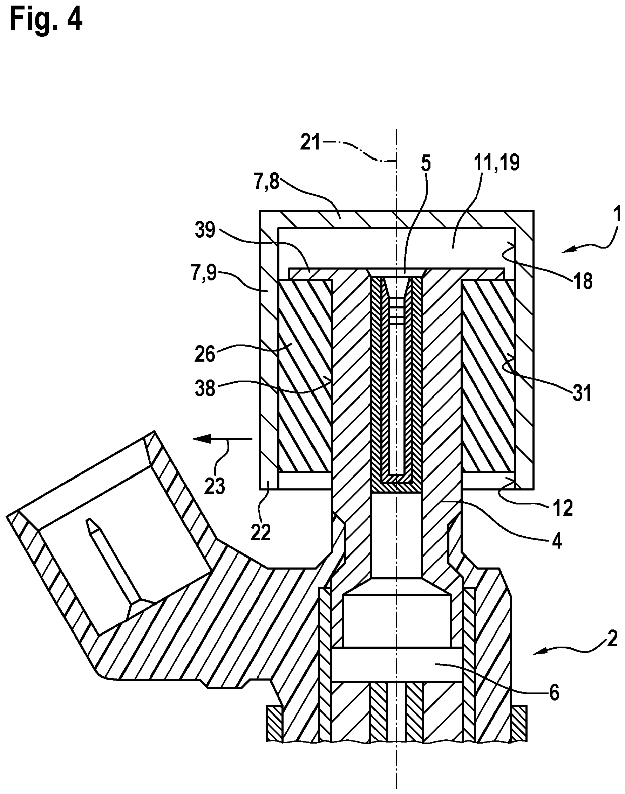

Fig. 4 zeigt das Verbindungselement 1 und das Brennstoffeinspritzventil 2 in einer auszugsweisen, schematischen Schnittdarstellung entsprechend einem erfindungsgemäßen Ausführungsbeispiel. In diesem Ausführungsbeispiel ist das Entkoppelelement 26 beispielsweise aus einem Elastomer gebildet. Das Entkoppelelement 26 liegt einerseits flächig an der Außenseite 38 des Brennstoffstutzens 4 an. Andererseits liegt das Entkoppelelement 26 flächig an einer Anlagefläche 31 der Innenseite 18 des Grundkörpers 7 an. In diesem Ausführungsbeispiel ist die Anlagefläche 31 ein echtes Teil der Innenseite 18, die sich nicht über die gesamte Innenseite 18 erstreckt. Die Verbindung zwischen dem Entkoppelelement 26 und dem Brennstoffstutzen 4 sowie dem Grundkörper 7 kann kraftschlüssig ausgestaltet sein. Zum Verbinden kann insbesondere ein Kleben oder Aufvulkanisieren des Elastomermaterials des Entkoppelelements 26 zum Einsatz kommen. Dadurch kann das Entkoppelelement 26 zusätzlich eine Dichtfunktion gewährleisten, die das Teil 19 des Aufnahmeraums 11 von der an die Öffnung 12 angrenzenden Umgebung abdichtet.

Ferner weist das zulaufseitige Ende 5 des Brennstoffstutzens 4 in diesem Ausführungsbeispiel einen radialen Kranz 39 auf, der sich in radialer Richtung 23 erstreckt. Der radiale Kranz 39 ist hierbei scheibenförmig ausgestaltet. Durch den radialen Kranz 39 ist eine Begrenzung der auf das Entkoppelelement 26 wirkenden Kraft beziehungsweise der Verformung des Entkoppelelements 26 realisiert. Die elastische Verformung des Entkoppelelements 26 ist hierbei in radialer Richtung 23 durch einen mechanischen Anschlag des radialen Kranzes 39 des Brennstoffstutzens 4 an der Innenseite 18 des Grundkörpers 7 begrenzt.

Fig. 5 zeigt eine Brennstoffeinspritzanlage 3 mit einem Verbindungselement 1 und einem Brennstoffeinspritzventils 2 in einer auszugsweisen, schematischen Schnittdarstellung entsprechend einem nicht erfindungsgemäßen Ausführungsbeispiel. Die Brennstoffeinspritzanlage 3 weist eine Brennstoff führende Komponente 45 auf. Die Brennstoff führende Komponente 45 ist in diesem Ausführungsbeispiel als Brennstoffverteiler 45, insbesondere Brennstoffverteilerleiste 45, ausgebildet. An dem Brennstoffverteiler 45 ist das Verbindungselement 1 angebracht. Das Verbindungselement 1 kann hierbei auf geeignete Weise mit einem rohrförmigen Grundkörper 46 des Brennstoffverteilers 45 verbunden sein. Hierbei kann das Verbindungselement 1 auch Bestandteil des Brennstoffverteilers 45 sein. An dem Brennstoffverteiler 45 sind vorzugsweise mehrere solcher Verbindungselemente 1 angeordnet, die jeweils zum Verbinden mit einem Brennstoffeinspritzventil 2 dienen.

In diesem Ausführungsbeispiel ist an dem Brennstoffstutzen 4 eine Ausbuchtung 47 ausgebildet. Bei der Ausbuchtung 47 handelt es sich um einen halbrunden Wulst 47. Im Profil ist die Ausbuchtung 47 des Brennstoffstutzens 4 konvex ausgestaltet.

Entsprechend ist im Bereich der Ausbuchtung 47 des montierten Brennstoffstutzens 4 eine im Profil konkave Anlagefläche 31 des Grundkörpers 7 ausgestaltet. Zwischen der Ausbuchtung 47 des Brennstoffstutzens 4 und der konkaven Anlagefläche 31 des Grundkörpers 7 ist in diesem Ausführungsbeispiel das Entkoppelelement 26 angeordnet. Das Entkoppelelement 26 ist hierdurch entsprechend gebogen ausgestaltet. In diesem Ausführungsbeispiel ist das Entkoppelelement 26 aus einem Elastomer gebildet.

Bei einer abgewandelten Ausführungsform kann das Entkoppelelement 26 auch mehrschichtig ausgestaltet sein, wie es beispielsweise anhand der Fig. 2 beschrieben ist.

Bei dieser Ausgestaltung wird über das Entkoppelelement 26 eine elastische Abstützung des Brennstoffstutzens 4 an dem Grundkörper 7 in radialer Richtung ermöglicht. Hierbei wird zudem auch eine elastische Abstützung entlang der Achse 21 ermöglicht. Hierdurch ist eine vorteilhafte Aufhängung des Brennstoffeinspritzventils 2 realisiert.

Der Grundkörper 7 und der Brennstoffstutzen 4 können nicht rotationssymmetrisch, sondern in Umfangsrichtung unterbrochen ausgestaltet sein. Hierdurch ist eine Montage über eine Steck-Dreh-Bewegung möglich. Hierdurch kann die Verbindung insbesondere als Bajonettverschluss ausgeführt werden.

Bei dieser Ausgestaltung können Lagertoleranzen sehr gut ausgeglichen werden, da das Brennstoffeinspritzventil 2 in seiner Aufhängung am Verbindungselement 1 drehbar gelagert werden kann.

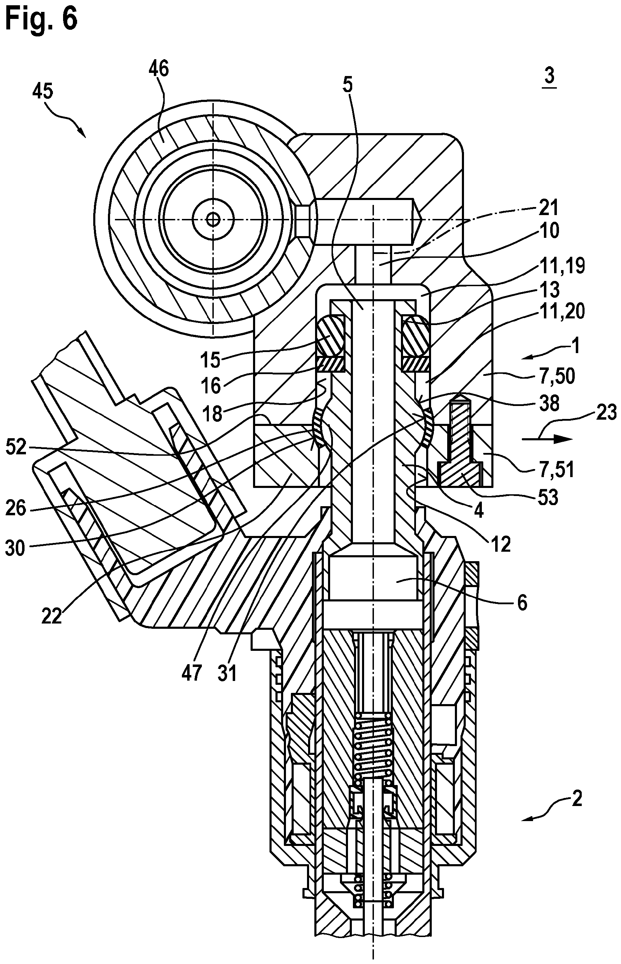

Fig. 6 zeigt eine Brennstoffeinspritzanlage 3 mit einem Verbindungselement 1 und einem Brennstoffeinspritzventil 2 in einer auszugsweisen, schematischen Schnittdarstellung entsprechend einem nicht erfindungsgemäßen Ausführungsbeispiel. In diesem Ausführungsbeispiel ist der Grundkörper 7 des Verbindungselements 1 mehrteilig ausgestaltet. Insbesondere sind in diesem Ausführungsbeispiel Teile 50, 51 des Grundkörpers 7 dargestellt, die an einer Verbindungsfläche 52 aneinander gefügt sind. Bei der Montage kann das Teil 51 des Grundkörpers zunächst von dem Teil 50 gelöst sein, um das Entkoppelelement 26 anzubringen. Anschließend ist eine Verschraubung durch ein oder mehrere Schraubelemente 53 möglich. Hierdurch können der Brennstoffstutzen 4 und der Grundkörper 7 im Bereich des Brennstoffstutzens 4, insbesondere der Aufnahmeraum 11, rotationssymmetrisch ausgestaltet werden.

Die Verbindung der Teile 50, 51 des Grundkörpers 7 kann allerdings auch auf andere Weise erfolgen.

Die Erfindung ist nicht auf die beschriebenen Ausführungsbeispiele beschränkt.

## Patentansprüche

1. Verbindungselement (1) für Brennstoffeinspritzanlagen (3) zur Verbindung eines Brennstoffeinspritzventils (2) mit einer Brennstoff führenden Komponente (45), wobei ein Grundkörper (7) vorgesehen ist, in dem ein Aufnahmeraum (11) für einen Brennstoffstutzen (4) des Brennstoffeinspritzventils (2) vorgesehen ist, wobei der zumindest teilweise in dem Aufnahmeraum (11) anordenbare Brennstoffstutzen (4) zumindest mittelbar an dem Grundkörper (7) abstützbar ist, wobei der Brennstoffstutzen (4) an dem Grundkörper (7) zumindest in einer radialen Richtung (23) elastisch abstützbar ist,
wobei zumindest ein Entkoppelelement (26) vorgesehen ist, das im montierten Zustand zwischen dem Brennstoffstutzen (4) und dem Grundkörper (7) angeordnet ist, und dass der Brennstoffstutzen (4) über das Entkoppelelement (26) zumindest in der radialen Richtung (23) an dem Grundkörper (7) elastisch abstützbar ist, wobei der Grundkörper (7) eine Innenseite (18) aufweist, dass das Entkoppelelement (26) eine Außenfläche (30) aufweist und dass das Entkoppelelement (26) mit seiner Außenfläche (30) an einer Anlagefläche (31) der Innenseite (18) des Grundkörpers (7) flächig anliegt,
**dadurch gekennzeichnet,**
**dass** das Entkoppelelement (26) eine größere axiale Erstreckung als die radiale Materialdicke des Entkoppelelements (26) im Querschnitt besitzt, so dass es zu einer großflächigen Anlage kommt, wobei der Brennstoffstutzen (4) einen radialen Kranz (39) aufweist und eine elastische Verformung des Entkoppelelements (26) in radialer Richtung durch einen mechanischen Anschlag des Kranzes (39) des Brennstoffstutzens (4) an dem Grundkörper (7) begrenzt ist und der Kranz (39) auch als axialer Anschlag für das Entkoppelelement (26) dient.

2. Verbindungselement nach Anspruch 1,
**dadurch gekennzeichnet,**
**dass** das Entkoppelelement (26) zumindest im Wesentlichen aus einem elastischen Werkstoff gebildet ist.

3. Brennstoffeinspritzanlage (3), insbesondere für gemischverdichtende, fremdgezündete Brennkraftmaschinen, mit zumindest einer Brennstoff führenden Komponente (45), zumindest einem Brennstoffeinspritzventil (2) und zumindest einem Verbindungselement (1) nach einem der Ansprüche 1 oder 2, wobei das Brennstoffeinspritzventil (2) über das Verbindungselement (1) mit der Brennstoff führenden Komponente (45) verbunden ist.

## Claims

1. Connecting element (1) for fuel injection systems (3) for connecting a fuel injection valve (2) to a fuel-conducting component (45), wherein a main body (7) is provided in which there is provided a receiving space (11) for a fuel connector (4) of the fuel injection valve (2), wherein the fuel connector (4), which is arrangeable at least partially in the receiving space (11), is supportable at least indirectly on the main body (7), wherein the fuel connector (4) is supportable elastically on the main body (7) at least in a radial direction (23), wherein at least one decoupling element (26) is provided which, in the assembled state, is arranged between the fuel connector (4) and the main body (7), and in that the fuel connector (4) is supportable elastically on the main body (7) at least in the radial direction (23) via the decoupling element (26), wherein the main body (7) has an inner side (18), in that the decoupling element (26) has an outer surface (30), and in that the decoupling element (26) lies areally with its outer surface (30) against a contact surface (31) of the inner side (18) of the main body (7),
**characterized**
**in that** the decoupling element (26) has an axial extent greater than the radial material thickness of the decoupling element (26) in cross section, such that contact occurs over a large area, wherein the fuel connector (4) has a radial ring (39) and an elastic deformation of the decoupling element (26) in a radial direction is limited by a mechanical abutment of the ring (39) of the fuel connector (4) against the main body (7), and the ring (39) also serves as an axial abutment for the decoupling element (26).

2. Connecting element according to Claim 1,
**characterized**
**in that** the decoupling element (26) is formed at least substantially from an elastic material.

3. Fuel injection system (3), in particular for mixture-compressing, applied-ignition internal combustion engines, having at least one fuel-conducting component (45), at least one fuel injection valve (2) and at least one connecting element (1) according to either of Claims 1 and 2, wherein the fuel injection valve (2) is connected by means of the connecting element (1) to the fuel-conducting component (45).

## Revendications

1. Élément de connexion (1) pour des installations d'injection de carburant (3) pour la connexion d'une soupape d'injection de carburant (2) à un composant (45) guidant le carburant, un corps de base (7) étant prévu, dans lequel un espace de réception (11) pour une tubulure de carburant (4) de la soupape d'injection de carburant (2) est prévu, la tubulure de carburant (4) pouvant être disposée au moins en partie dans l'espace de réception (11) pouvant être supportée au moins indirectement sur le corps de base (7), la tubulure de carburant (4) pouvant être supportée élastiquement sur le corps de base (7) au moins dans une direction radiale (23),
au moins un élément de découplage (26) étant prévu, lequel est disposé entre la tubulure de carburant (4) et le corps de base (7) dans l'état monté, et en ce que la tubulure de carburant (4) peut être supportée élastiquement sur le corps de base (7) au moins dans la direction radiale (23) par le biais de l'élément de découplage (26), le corps de base (7) comprenant un côté intérieur (18), en ce que l'élément de découplage (26) comprend une surface extérieure (30) et en ce que l'élément de découplage (26) s'appuie à plat par sa surface extérieure (30) contre une surface d'appui (31) du côté intérieur (18) du corps de base (7),
**caractérisé en ce que**
l'élément de découplage (26) présente une plus grande étendue axiale que l'épaisseur de matériau radiale de l'élément de découplage (26) dans la section transversale, de manière à produire un appui de grande surface, la tubulure de carburant (4) comprenant une couronne radiale (39) et une déformation élastique de l'élément de découplage (26) dans la direction radiale étant limitée par une butée mécanique de la couronne (39) de la tubulure de carburant (4) contre le corps de base (7) et la couronne (39) servant également de butée axiale pour l'élément de découplage (26).

2. Élément de connexion selon la revendication 1,
**caractérisé en ce que**
l'élément de découplage (26) est formé au moins sensiblement à partir d'une matière élastique.

3. Installation d'injection de carburant (3), en particulier pour des moteurs à combustion interne à allumage par étincelle à compression de mélange, comprenant au moins un composant (45) guidant le carburant, au moins une soupape d'injection de carburant (2) et au moins un élément de connexion (1) selon l'une quelconque des revendications 1 ou 2, dans laquelle la soupape d'injection de carburant (2) est connectée par le biais de l'élément de connexion (1) au composant (45) guidant le carburant.
